Europäisches Patentamt

(19) European Patent Office

Office européen des brevets

(11) Publication number: **0 013 073**
**B1**

(12) **EUROPEAN PATENT SPECIFICATION**

(45) Date of publication of patent specification: **22.09.82**

(21) Application number: **79302568.5**

(22) Date of filing: **14.11.79**

(51) Int. Cl.³: **C 08 F 257/02,**
**C 08 F 2/02, C 08 F 2/46,**
**C 08 L 25/16**

(54) **Cross linkable blends with ionizing radiations of p-methylstyrene polymer with a polyunsaturated monomer and shaped articles formed therefrom.**

(30) Priority: **20.12.78 US 971179**

(43) Date of publication of application:
**09.07.80 Bulletin 80/14**

(45) Publication of the grant of the patent:
**22.09.82 Bulletin 82/38**

(84) Designated Contracting States:
**BE DE FR GB IT NL**

(56) References cited:
**GB - A - 674 969**
**GB - A - 1 416 405**
**US - A - 2 539 377**
**US - A - 3 252 880**

**CHEMICAL ABSTRACTS, vol. 62, no. 10, 10th
May 1965, column 11995 Columbus, Ohio,
U.S.A. Z. O. KOSTILOVA et al.: "Radiochemical
cross-linking of polystyrene by means of cross-
linking agents"**

(73) Proprietor: **MOBIL OIL CORPORATION**
**150 East 42nd Street**
**New York New York 10017 (US)**

(72) Inventor: **Arbit, Harold Abraham**
**35 North Sixth Avenue**
**Highland Park, New Jersey 08904 (US)**

(74) Representative: **Cooper, John Anthony et al,**
**Mobil Court 3 Clements Inn**
**London WC2A 2EB (GB)**

Courier Press, Leamington Spa, England.

## Crosslinkable blends with ionizing radiations of p-methylstyrene polymer with a polyunsaturated monomer and shaped articles formed therefrom

This invention relates to blends of p-methyl-styrene polymers with polyunsaturated monomers which blends can be crosslinked by ionizing radiation, and to shaped articles made from such blends.

The present invention provides a blend of (i) a p-methylstyrene homopolymer or copolymer thereof with from 1 to 10 weight percent of a conjugated diene, and of (ii) from 0.1 to 10 weight percent of a polyunsaturated monomer, which blend is crosslinkable with from 20 to 45 M rads of ionizing radiation.

The monomer used in preparing the homopolymer or copolymers from which the blends of this invention are made is p-methylstyrene. It is within the contemplation of this invention to use mixtures of isomers of methylstyrene rich in p-methylstyrene, and references herein to p-methylstyrene should be construed accordingly. Such mixtures contain at least 95 weight percent, preferably 97—99 weight percent, p-methylstyrene and less than 0.1 weight percent o-methylstyrene with the balance being m-methylstyrene. A typical mixture contains, by weight, about 95 percent p-methylstyrene, about 0.05 percent o-methylstyrene, and the balance of m-methylstyrene. Such mixtures are obtained by catalytic dehydrogenation of the mixtures of ethylmethylbenzene isomers described in U.S. Patent No. 4,086,287.

The polymers contemplated herein are p-methyl-styrene or p-methylstyrene-rich isomer mixture homopolymers or their copolymers containing from 1 to 10 weight percent conjugated diene, such as butadiene and isoprene. The polymerization reaction is carried out by using methods and catalysts well known in the art for polymerizing styrene. The reaction can be carried out in solution, bulk, suspension, or emulsion.

The material that is blended with the (p-methylstyrene) polymer is a polyunsaturated monomer. Typical monomers contemplated are divinylbenzene; neopentylglycol diacrylate; trimethylolpropane triacrylate; trimethylolpropane trimethylacrylate; allyl methacrylate; pentaerythritol triacrylate; pentaerythritol tetramethacrylate; butylene glycol dimethylacrylate; tetraethyleneglycol diacrylate; 1,6-hexanediol dimethacrylate; 1,6-hexanediol diacrylate; diethyleneglycol diacrylate; diethyleneglycol dimethyacrylate; n-hexenyl methacrylate; polyethyleneglycol dimethacrylate; tetraethyleneglycol dimethacrylate; ethyleneglycol dimethacrylate; diethylene glycol dimethacrylate; and diallyl fumarate.

Small amounts of such polyunsaturated monomers are effective to induce crosslinking by radiation at low dosage levels. From 0.1 to 10 weight percent, preferably from 0.5 weight to 5 weight percent of the polyunsaturated monomer is used. Blending can be effected in a variety of ways, such as in solution in aromatic solvents, such as toluene, from which sheets or films can be cast. The blend components can be mixed in a tumbling agitator and fed into an extruder to produce sheets, films, or foamed sheets, or they can be fed separately to an extruder for extruder blending.

The blends of this invention can be formed into sheets, films, or foamed sheets and thermoformed to produce shaped articles, such as food containers. After being irradiated, such shaped articles are heat resistant and are not affected by fatty foods under microwave oven conditions.

Ionizing radiation is inclusive of extremely short-wavelength, high energetic, penetrating rays such as gamma rays, X-rays, and subatomic particles accelerated in cyclotrons, betatrons, synchrotrons, and linear accelerators. The effect of irradiating the shaped articles is to cross-link the (p-methylstyrene) polymer blend. The irradiation dose is from 20 megarads to 45 megarads, whereas poly(p-methylstyrene) alone requires between about 50 megarads and about 60 megarads. Similar blends using polystyrene are not crosslinked at low dosages of ionizing radiation.

The following example illustrates the invention.

Example

Poly(p-methylstyrene) (PPMS), containing 3% meta isomer and 0.1% ortho isomer, was dissolved in toluene at a concentration of 25 weight percent. Then, 5 weight percent trimethylolpropane trimethylacrylate (TMPTMA) based on solids weight was added and dissolved. Films were cast onto a smooth surface coated with polyethylene terephthalate and drawn down and dried to obtain a dried film thickness of about 0,05 mm. Film samples were irradiated by electron beam at various megarad (M Rads) doses. For each dosage level, crosslinking was determined by measuring solubility of the irradiated films in toluene at room temperature overnight. Any insoluble gel thus formed was filtered and dried to constant weight at 115°C. For comparison, films of polystyrene (PS) containing 5 weight percent of the TMPTMA used above were irradiated and tested for gel content. Pertinent data are set forth in the following Table.

|  | TABLE | |
|  | Gel content, % | |
|  | 5% TMPTMA in | |
| Dose, M Rads | PPMS | PS |
| --- | --- | --- |
| 0 | 0 | 0 |
| 2 | 0 | 0 |
| 12 | 9.1 | 0 |
| 22 | 70.2 | 0 |

From the data in the Table, it will be noted that at doses of about 20 M Rads substantial crosslinking of the blend of PPMS and TMPTMA took place as measured by gelation, whereas PS blends did not crosslink. With PPMS alone (unblended), doses in the order of 50—60 M Rads were required. Thus, using the blends of this invention considerable energy savings are effected.

## Claims

1. A blend of (i) a p-methylstyrene homopolymer or copolymer thereof with from 1 to 10 weight percent of a conjugated diene, and of (ii) from 0.1 to 10 weight percent of a polyunsaturated monomer, which blend is crosslinkable with from 20 to 45 M rads of ionizing radiation.

2. A blend according to claim 1, containing from 0.5 to 5 weight percent of the polyunsaturated monomer.

3. A blend according to claim 1 or claim 2, wherein the polyunsaturated monomer is divinylbenzene, neopentylglycol diacrylate, trimethylolpropane triacrylate, trimethylolpropane trimethacrylate, allyl methacrylate, pentaerythritol triacrylate, pentaerythritol tetramethacrylate, butyleneglycol dimethacrylate, tetraethyleneglycol diacrylate, 1,6-hexanediol dimethacrylate, 1,6-hexanediol diacrylate, diethyleneglycol diacrylate, diethyleneglycol dimethacrylate, n-hexenyl methacrylate, polyethyleneglycol dimethacrylate, tetraethyleneglycol dimethacrylate, ethyleneglycol dimethacrylate, diethylene glycol dimethacrylate, or diallyl fumarate.

4. A blend according to any one of claims 1 to 3, wherein the polyunsaturated monomer is trimethylolpropane trimethacrylate.

5. A shaped article obtained by subjecting a blend according to any one of claims 1 to 4 to from 20 to 45 M rads of ionizing radiation.

## Revendications

1. Mélange de (1) un homopolymère de p-méthylstyrène ou un copolymère correspondant formé avec 1 à 10% en poids d'un diène conjugué et (2) 0,1 à 10% en poids d'un monomère insaturé, ce mélange pouvant être réticulé avec 20 à 45 Mrad de rayonnement ionisant.

2. Mélange selon la revendication 1, contenant 0,5 à 5% en poids du monomère polyinsaturé.

3. Mélange selon l'une des revendications 1 ou 2, dans lequel le monomère polyinsaturé est le divinylbenzène, le diacrylate de néopentylglycol, le triacrylate de triméthylolpropane, le triméthacrylate de triméthylolpropane, le méthacrylate d'allyle, le triacrylate de pentaérythritol, le tétraméthacrylate de pentaérythritol, le diméthacrylate de butylèneglycol, le diacrylate de tétraéthylèneglycol, le diméthacrylate d'hexanediol-1,6, le diacrylate d'hexanediol-1,6, le diacrylate de diéthylèneglycol, le diméthacrylate de diéthylèneglycol, le méthacrylate de n-hexényle, le diméthacrylate de polyéthylèneglycol, le diméthacrylate de tétraéthylèneglycol, le diméthacrylate d'éthylèneglycol, le diméthacrylate de diéthylèneglycol, ou le fumarate de diallyle.

4. Mélange selon l'une quelconque des revendications 1 à 3 dans lequel le monomère polyinsaturé est le triméthacrylate de triméthylolpropane.

5. Article façonné obtenu en soumettant un mélange selon l'une quelconque des revendications 1 à 4 à un rayonnement ionisant de 20 à 45 Mrad.

## Patentansprüche

1. Gemisch aus (1) einem p-Methylstyrol-Homopolymeren oder einem Copolymeren davon mit 1 bis 10 Gew.-% eines konjugierten Diens und (2) 0,1 bis 10 Gew.-% eines polyungesättigten Monomeren, wobei das Gemisch mit 20 bis 45 M-Rad Ioniserungsbestrahlung quervernetzbar ist.

2. Gemisch nach Anspruch 1, enthaltend 0,5 bis 5 Gew.-% von dem polyungesättigten Monomeren.

3. Gemisch nach den Ansprüchen 1 oder 2, wobei das polyungesättigte Monomere Divinylbenzol, Neopentylglycoldiacrylat, Trimethylolpropantriacrylat, Trimethylolpropantrimethacrylat, Allylmethacrylat, Pentaerythrittriacrylat, Pentaerythrittetramethacrylat, Butylenglycoldimethacrylat, Tetraäthylenglycoldiacrylat, 1,6 - Hexandioldimethacrylat, 1,6-Hexandioldiacrylat, Diäthylenglycoldiacrylat, Diäthylenglycoldimethacrylat, n - Hexenylmethacrylat, Polyäthylenglycoldimethacrylat, Tetraäthylenglycoldimethacrylat, Äthylenglycoldimethacrylat, Diäthylenglycoldimethacrylat oder Diallylfumarat ist.

4. Gemisch nach den Ansprüchen 1 bis 3, wobei das polyunsubstituierte Monomere Trimethylolpropantrimethacrylat ist.

5. Geformter Gegenstand, dadurch erhalten, daß ein Gemisch gemäß den Ansprüchen 1 bis 4 einer Ionisierungsbestrahlung von 20 bis 45 M-Rad unterworfen worden ist.